# EUROPEAN PATENT SPECIFICATION

(11) **EP 3 117 706 B1**
(45) Date of publication and mention of the grant of the patent: **11.09.2019**
(21) Application number: 15176823.1
(22) Date of filing: 15.07.2015
(51) Int. Cl.: A01M 7/00, A01M 9/00

(54) **INTEGRATED PEST MANAGEMENT BY USE OF UNMANNED UNITS**
INTEGRIERTE SCHÄDLINGSBEKÄMPFUNG UNTER VERWENDUNG UNBEMANNTER EINHEITEN
GESTION DES PARASITES INTÉGRÉE EN UTILISANT DES UNITÉS SANS ÉQUIPAGE

(43) Date of publication of application: 18.01.2017
(73) Proprietor: Anders Petersen Holding ApS, 4200 Slagelse (DK)
(72) Inventor: Petersen, Anders, 4200 Slagelse (DK)
(74) Representative: Plougmann Vingtoft a/s

(56) References cited:
- US-A- 4 723 709
- US-A1- 2011 160 920
- S. P Foster ET AL: "BEHAVIORAL MANIPULATION METHODS FOR INSECT PEST-MANAGEMENT", Annual Review of Entomology, 1 January 1997 (1997-01-01), pages 123-146, XP055245200, 4139 El Camino Way, P.O. Box 10139 DOI: 10.1146/annurev.ento.42.1.123 Retrieved from the Internet: URL:http://www.annualreviews.org/doi/pdf/1 0.1146/annurev.ento.42.1.123 [retrieved on 2016-01-27]

## Description

### FIELD OF THE INVENTION

The invention relates to pest management in an agricultural environment, particularly to pest management by use of unmanned units, e.g. unmanned aerial vehicles.

### BACKGROUND OF THE INVENTION

In today's agriculture pesticides are often chosen for controlling pest. However, pesticides are known to be potentially poisonous and a threat for the environment. Environmentally friendly alternatives to pesticides such as biological pest control agents are also available for agricultural pest control. However, such biological pest agents may be expensive and may not be sufficiently effective, sufficiently convenient to disperse, and/or sufficiently reliably spatially localized over time to the areas where they have been initially destined.

Accordingly, there is a need to reduce usage of potentially poisonous chemical pesticides within agriculture. There is also a need to improve the efficiency of biological pest agents and other environmentally friendly alternatives to pesticides.

An implication of the need to improve efficiency of the biological pest agents is the need for ability to deliver precisely and ideally often sparsely the various pesticides, including e.g. the biological and chemical pest agents. Precision may here relate to temporal constraints of delivery, precise ground location and/or certain fields, crop rows etc., but also to precise plant location, e.g. in terms of three top, crowns, stems, branches, leaves, flowers, fruits or other parts of the plants, and even relate to 'angle of attack' and/or closeness of the delivery.

A further implication of the need to improve efficiency of the biological pest agents is the need to constrain for a certain time period the activity and migration of the beneficial biological pest agents, in order to obtain a desired and maximal beneficial effect.

S. P Foster ET AL: "BEHAVIORAL MANIPULATION METHODS FOR INSECT PEST-MANAGEMENT", Annual Review of Entomology, 1 January 1997 (1997-01-01), pages 123-146, XP055245200, discloses use of stimuli to manipulate behavior of a pest for the purpose of protecting a valued resource. The methods are divided into two categories: those that manipulate behavior over a long distance, e.g. volatile chemicals, visual, and auditory stimuli, and those that manipulate behavior at a short distance (< 1 cm), e.g. involatile chemicals. Particular emphasis is placed on methods that have been developed through studies of pest behavior and on combining stimuli to increase efficacy. Future prospects for behavioral manipulation methods in pest management are discussed.

US 2011/160920 A1 discloses a method for delivering fluid to a site using a mobile fluid delivery machine. The method includes determining a location of the mobile fluid delivery machine on the site, and determining a fluid delivery rate based on the location of the mobile fluid delivery machine using information related to the site. The method further includes delivering the fluid to a surface of the site at the location of the mobile fluid delivery machine, at the determined fluid delivery rate.

US 4 723 709 discloses an improved multi-boom field spraying apparatus designed to spray in a sequential manner one or more of a plurality of liquids to a selected spray zone among a number of spray zones. The apparatus contains a novel spray, agitate air and rinse system.

### SUMMARY OF THE INVENTION

In general it is an object to improve pest management in an agricultural environment.

It is an object of the present invention to reduce usage of potentially poisonous chemical pesticides within agriculture. It is also an object to improve the efficiency of biological pest agents and other environmentally friendly alternatives to chemical pesticides.

In particular, it may be seen as an object of the present invention to provide methods for improving pest management by use of unmanned aerial units and unmanned ground units.

In a first aspect of the invention there is provided a method using an unmanned system comprising one or more unmanned aerial units for a cultivation method for improving plant growing processes in an agricultural environment, wherein the one or more unmanned aerial units are configured with a first delivering device for delivering a behavioural control agent for controlling behaviour of organisms and a second delivering device for delivering a different pest control agent in the form of living organisms for reducing harmfulness of pest organisms, where the second delivery device is a mechanical device capable of delivering the living organisms, the method comprises the steps:
- determining a first area and a second area dependent on a location of pest susceptible plants, and by using the unmanned system,
- delivering the behavioural control agent over the first area, and
- delivering the pest control agent over the second area.

The location of pest susceptible plants may be determined by different methods as described in the detailed description. The determination of pest susceptible plants may be included as a step in an embodiment of the invention.

The first area and the second area may be determined directly based on a location of pest susceptible plants. Alternatively, the first area and/or the second area may be determined indirectly from the information relating to location of pest susceptible plants. For example, when the first area has been determined initially the second area could be determined directly from the determined first area, i.e. indirectly from the information relating to the location of pest susceptible plants. Similarly, when the second area has been determined initially the first area could be determined directly from the determined second area, i.e. indirectly from the information relating to the location of pest susceptible plants.

The first area and the second area may be determined dependent on the information relating to the location of pest susceptible plants and other parameters. Such other parameters include:
- types of harmful organisms,
- types of plants,
- types of behavioural control agent and pest control agents that are available or desired,
- climate data, such a temperature, wind and weather forecasts, and
- seasonal data.

The utilisation of both behavioural control agents and pest control agents by use of unmanned units advantageously enables delivery of the agents in first and second areas. The first and second areas may be accurately determined, e.g. based on information relating to locations of pest susceptible plants, to optimise the effectiveness of the control agents.

The embodiment offers new technical solutions and advantages for both modern day organic and environmentally sustainable types of farming. Pest management principles that can be advanced according to the embodiment includes: mating disruption, attract-and-kill, push-pull and mass-trapping strategies, which are generally considered to be environmentally more friendly strategies than any traditional usage of chemical pesticides. Accordingly, the embodiment allows at least reduction in the usage of potentially poisonous chemical pesticides within agriculture or enables a more efficient use of biological pest agents.

Accordingly, the embodiment of the first aspect may enable more selective, precise, efficient and environmentally sustainable pest management by enabling smart integration of behavioural and pest regulation with means for planning in terms of determination of areas for delivery of behavioural and pest control agents.

According to an embodiment, the method comprises delivering the pest control agent over the second area after the behavioural control agent has been delivered over the first area. For example, the pest control agent may be delivered over the second area a predetermined time delay after the behavioural control agent has been delivered over the first area. By timing the delivering of the pest control agent relative to the behavioural control agent the effect of the agents may be optimised.

According to an embodiment, the method comprises
- determining a location of plants infected by the pest organisms,
- determining an infection condition of the plants infected by the pest organisms, and
- determining the first area dependent on the location of the infected plants and the infection condition.

The determination of plants infected by the pest organisms may be performed alternatively or additionally or as part of determining a location of pest susceptible plants. Advantageously, the determination of infection conditions, i.e. the severity of infections, may be used for improved determination of the first and/or second areas.

According to an embodiment, the method comprises determining the first area as an integral area which spans a plurality of locations of pest susceptible plants.

According to an embodiment, the method comprises determining the second area so that the second area, at least partially, circumscribes the first area. Advantageously, delivery of the pest control agent over an area that circumscribes the first area may ensure that harmful organisms in the circumscribed area do not escape from e.g. predator mites delivered in the second area. It is understood that the circumscribing second area surrounds or encloses the first area without overlapping the first area.

According to an embodiment, the method comprises determining the first area so that the first area, at least partially, circumscribes the second area and wherein the second area is determined so that it constitutes at least a fraction of the area circumscribed by the first area. Advantageously, delivery of the behavioural control agent over an area that circumscribes the second area may ensure that the harmful organisms are concentrated in the second area, e.g. within a fraction of the circumscribed area, so that the effect of the pest control agent is optimised.

According to an embodiment, the one or more unmanned units are configured with one or more first delivering devices for delivering a behavioural attraction agent for attracting the organisms and for delivering a behavioural repulsion agent for repelling the organisms, where
- the step of determining the first area comprises determining an attraction area and a repulsion area, and
- the step of delivering the behavioural control agent over the first area comprises delivering the behavioural attraction agent over the attraction area and delivering the behavioural repulsion agent over the repulsion area.

For example, the repulsion area may be determined so that the repulsion area surrounds or circumscribes the attraction area.

According to an embodiment, the one or more unmanned units are configured with one or more second delivering devices for delivering different first and second pest control agents, where the step of delivering the pest control agent over the second area comprises delivering the first and second pest control agents over the second area.

According to an embodiment the method comprises determining first and second delivering areas, where the step of delivering the pest control agent over the second area comprises delivering the first and second pest control agents over the first and second delivering areas, respectively.

For example, the one or more unmanned units may be configured with one or more second delivering devices for delivering first and second different pest control agents, wherein
- the step of determining the second area comprises determining first and second delivering areas, e.g. first and second delivering areas with different locations such as first and second delivering areas with overlapping or non-overlapping areas, and
- the step of delivering the pest control agent over the second area comprises delivering the first and second pest control agents over the first and second delivering areas, respectively.

A second aspect of the invention relates to an unmanned system for improving plant growing processes in an agricultural environment, the unmanned system comprises one or more unmanned aerial units, where the one or more units are configured with a first delivering device for delivering a behavioural control agent for controlling behaviour of organisms and a second delivering device for delivering a different pest control agent in the form of living organisms for reducing harmfulness of pest organisms, where the second delivery device is a mechanical device capable of delivering the living organisms, the unmanned system further comprises a processor configured to, - determine a first area and a second area dependent on a location of pest susceptible plants, where the first area is determined for delivery of the behavioural control agent, and where the second area is determined for delivery of the pest control agent.

According to an embodiment of the second aspect the processor is further configured to control the unmanned system to deliver the behavioural control agent over the first area and to deliver the pest control agent over the second area.

In general the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Fig. 1 illustrates an example of a cultivation system for improving plant growing processes in an agricultural environment using an unmanned system,
Fig. 2 illustrates an example of a location of pest susceptible plants constituting a fraction of the agricultural environment and the first area and second area constituting a fraction of the location of pest susceptible plants,
Fig. 3 illustrates determination of an integral area which spans a plurality of locations of pest susceptible plants,
Fig. 4 illustrates an example where the second area circumscribes the first area,
Fig. 5 illustrates an example where the first area circumscribes the second area,
Fig. 6 illustrates an example where the first area comprises an attraction area and a repulsion area,
Fig. 7 illustrates an example where the first area is divided into attraction areas and repulsion areas, and
Fig. 8 illustrates an example where the pest susceptible area has been determined as a plurality of pest susceptible areas.

### DESCRIPTION OF EMBODIMENTS

Embodiments of the invention relates to a cultivation method for improving plant growing processes in an agricultural environment using an unmanned system comprising one or more unmanned units, e.g. unmanned aerial units or unmanned ground units. The one or more units are configured with a first delivering device for delivering behavioural control agents for controlling behaviour of organisms (harmful or beneficial) in the agricultural environment and a second delivering device for delivering pest control agents for reducing harmfulness of pest organisms, i.e. the harmfulness that the pest organisms have on the plant growing processes.

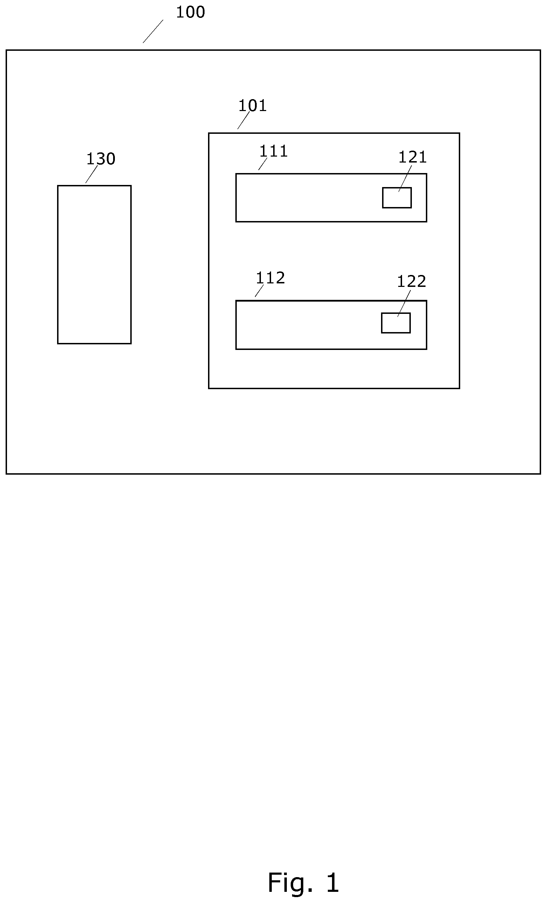

Fig. 1 illustrates an example of a cultivation system 100 for improving plant growing processes in an agricultural environment using an unmanned system 101. In this example the unmanned system 101 comprises a first unmanned unit 111 configured with a first delivering device 121 and a second unmanned unit 112 configured with a second delivering device 122. Each of the first and second unmanned units could be an unmanned aerial unit, an unmanned ground unit or an unmanned aerial-ground vehicle. The same unmanned unit 111 could be configured with first and second delivering devices 121,122 so that the same unit 111 could be used for delivering both the behavioural control agents and the pest control agents.

The cultivation system 100 may further comprise a processor 130 configured to process data received from the unmanned system, e.g. data received wirelessly or wired. For example, the processor 130 may receive data relating to an unmanned unit's coordinates, e.g. GPS coordinates. The processor 130 may also be configured to determine a path that the one or more unmanned units should follow and to transmit path data to the unmanned units. Accordingly, the processor 130 may be configured to generate data which is used for controlling manoeuvring, i.e. driving or flying, of the unmanned units, and for controlling the delivering devices to deliver the desired amounts at intended locations. The data could be dispatched to the unmanned system 101 wirelessly, e.g. during manoeuvring, or wired, e.g. before the unmanned units are used in the agricultural environment.

### Definitions:

Cultivation method: A cultivation method, which may also be referred to as a farming method is a method for growing crops in different agricultural environments.

Organisms: These are the organisms of interest, i.e. the organisms which behaviour it is desired to control. The organisms may be harmful organisms (often denoted pests), e.g. which harm the crop in the agricultural environment. The organisms may also be beneficial organisms, which benefit the crop in the agricultural environment; benefits can be e.g. minimizing the harmful effect of pest organisms and/or other beneficial action such as serving as pollen vectors. Reasons for desire to control behaviour can include the following three examples: 1) It can be advantageous to control behaviour of both harmful and beneficial types of organisms, e.g. to increase the probability rate that a beneficial organism encounters a pest organism, in which case the harmfulness of the later be reduced. 2) It can be advantageous to control the behaviour of beneficial organisms so that they stay in a given area, which is within the interest areas of the farmer. 3) It can be advantageous for the farmer to limit the harmful organisms from staying in certain interest areas.

Beneficial organisms can include e.g.: insects, arachnids, plants, bacteria, fungi, viruses, nematodes that benefits the plant growing processes.

Harmful organisms or pest organisms can include e.g.: insects, arachnids, plant pathogens, weeds, mollusks, birds, mammals, fish, nematodes, and microbes that destroy property, cause nuisance, or spread disease, or are disease vectors.

The same organism may be a beneficial organism in some situations and a harmful organism in other situations.

Behavioural control agent: The behavioural control agent may be any living organism or biological substance. For example, biological substances may contain pheromones capable of attracting or repelling the organisms. For example, living organisms could be species similar to the organisms, e.g. species of a particular sex having the ability to attract the organisms and/or release of sterile organisms. The behavioural control agent may also be in the form of synthesised chemicals and/or semiochemicals, which are important e.g. for insect and plant type of signalling and/or communications.

Pest control agent: The pest control agent may be a biological control agent in the form of living organisms also referred to as beneficial organisms (e.g. organisms such as predator mites). The beneficial organisms may e.g. have the ability to eat the harmful organisms or parasitize eggs of harmful organisms, in order to reduce the organisms' harmful behaviour, e.g. by making them weak, and/or to repel harmful organisms. The pest control agent may also be in the form of biological substance, e.g. a substance containing pheromones, capable of reducing organisms' harmful behaviour. For example, pheromones may be sex hormones having the effect of changing the behaviour into a mate-seeking behaviour. The pest control agent may also be in the form of traditional (chemical) pesticides.

Unmanned units: The unmanned units may be a combination of autonomous, semi-autonomous or remote controlled unmanned aerial units, unmanned ground units or unmanned aerial-ground units. For example, a first behavioural control agent could be delivered by a remote controlled aerial unit and a second pest control agent could be delivered by an autonomous aerial unit or an autonomous ground unit. Accordingly, an unmanned unit may be capable of moving on ground or in air in an autonomous way without receiving input from some external source, may be capable of moving in a semi-autonomous way based partly on decisions determined by the unit itself and partly on input from an external source, or may be capable of moving only based on input from an external source, e.g. a remote controller.

An unmanned unit may be capable to receive, capture, process and transmit images and other sensor data providing information on its surroundings, which may in an agricultural context, include e.g. various conditions of soil, weeds, crops and pest infestation states.

One or more unmanned units constitute an unmanned system. An unmanned aerial unit, also known as an unmanned aerial vehicle or a drone, i.e. an air craft, e.g. a small sized air craft, without a human pilot aboard. An unmanned ground unit or vehicle is a unit capable of moving on ground typically by means of wheels or belts, and doing so without a human driver aboard. An unmanned aerial-ground unit is a unit capable of flying and ground motion, e.g. a unit provided with propellers for flying and wheels for ground motion; the aerial-ground unit has neither a human driver nor a human pilot aboard.

Agricultural environment: An agricultural environment may be an environment used for cultivation within agricultural fields such as: arable farming, horticulture, arboriculture, viticulture, silviculture and aquaculture.

Delivering devices: Delivering devices may for example be mechanical devices capable of delivering living organisms like predator mites, e.g. by a mechanical spreading device such as a rotating spreading device.

Other delivering devices (e.g. based on tubes or spray nozzles) may be devices particularly configured to spread synthesised chemicals, pheromones or pesticides provided in liquid form. The delivering devices provide an option for intelligent automatic regulation of concentration/dosage to be applied to any location within the area of interest. For example, the delivering devices may be able to deliver a particular concentration based on input data received from an unmanned unit or the processor 130. The delivering device may be configured to deliver a particular control agent or may be able to deliver different types of control agents. For example, a delivering device may be able to support combined delivery of multiple behavioural control agents and/or pest control agents, delivered in one or more flights as required. For example, in a first flight the delivering device may be controlled to deliver a behavioural control agent and in a second flight the delivering device may be controlled to deliver a pest control agent.

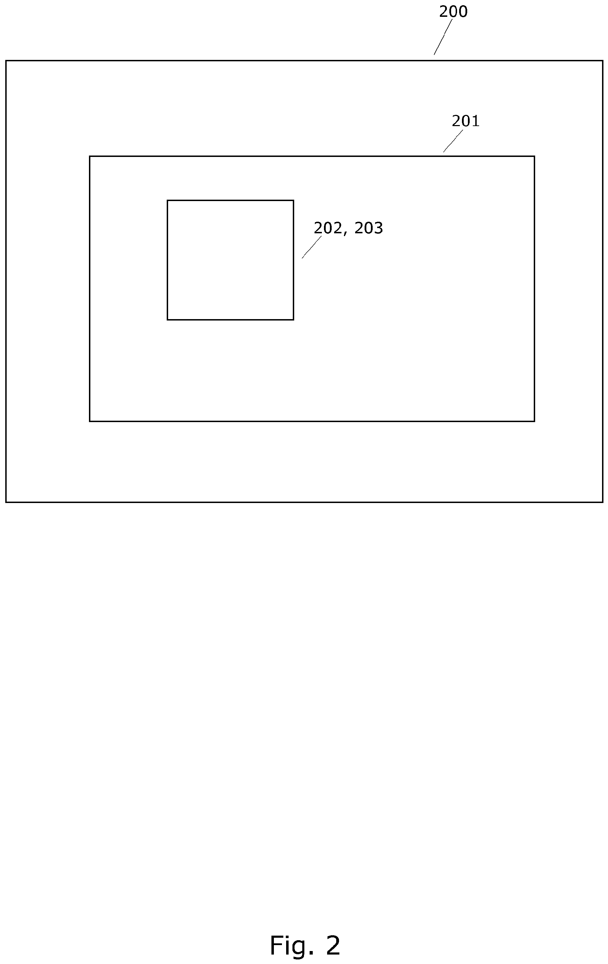

Figs. 2-5 illustrate examples of the cultivation method. According to the examples, the cultivation method comprises the steps of
- determining a location 201 of pest susceptible plants, i.e. plants infected by harmful organisms or plants susceptible to being damaged by pest,
- determining a first area 202 dependent on the location 201 of pest susceptible plants,
- determining a second area 203 dependent on the location 201 and/or the first area 202,
- delivering a behavioural control agent over the first area, and
- delivering a pest control agent over the second area.

It is understood that the location 201 of pest susceptible plants may be a location wherein a risk for future infection by harmful organisms has been determined or may be a location wherein plants already infected by harmful organisms has been determ ined.

The determination of the location 201 of plants susceptible to pest damage may be determined either automatically or manually based, for example by inspecting the agricultural environment, e.g. inspecting the condition of plants in a field and/or types and population density of harmful organisms. Locations of interest, e.g. locations having a high population density of harmful organisms of a given species, may be entered into a digital map, e.g. via manual or automatic entering of GPS coordinates.

The location 201 of pest susceptible plants may also be determined from images or measurements of pheromones or other measureable insect-presence-indicator, e.g. sound. A laser radar may also be used for detecting presence or population of organisms. For example, an unmanned aerial or ground unit may be used for recording images capable of displaying plant characteristics, plant conditions and/or presence of harmful organisms. Similarly, since specific organisms may directly, or indirectly via other organisms or plants, cause the release of characteristic pheromones, measurements of such pheromones may be used to determine presence and population density of certain organisms. The automatically or manually obtained images or measurements may be processed to determine locations 101 of plants infected by harmful organisms. The determined locations may be entered into a digital map to form a map indication of presence of harmful organisms. For example, performing a threshold on the insect population density may be used to identify and set the boundaries of the locations 201 of pest susceptible plants.

The locations 201 of plants susceptible to pest damage can also be determined either in parts or fully by heuristics or mathematically based prognoses (e.g. when infection has not actually occurred, but when rather a severe infection is deemed likely due the combination of information from any set of variables containing predictive power with respect to predicting infestation levels). Sources of information to be combined in the prognoses can involve a multitude of data such as: climate data, weather data, soil data, insect counts from local or neighbouring fields and insect traps placed herein, local weather stations, time of season, types of neighbouring crops, damage in neighbouring fields, and also historical pest data, thresholds and warning models.

The first area 202 and the second area 203 could be equal to the determined location or locations 201, or could be smaller or larger than the location(s) 201.

The manual inspection of the agricultural environment or the automatically or manually obtained images or measurements may be used for determining an infection condition of the plants, i.e. a degree of damage or infection of the plants. As an example, the first area 202 may be determined dependent on the determined infection condition and the location of the infected plants. For example, the processor 130 may determine the first area 202 from locations of infected plants where the plants have an infection condition above a given threshold.

Similarly, heuristics or mathematically based prognoses may be used for determining e.g. likelihoods for infection conditions of plants. In this case the first area 202 may be determined dependent on the determined likelihoods. For example, the processor 130 may determine the first area 202 from locations of plants where the plants have associated likelihoods of a severe infection condition above a predetermined likelihood threshold.

The processor 130 may be configured to determine the location 201 of pest susceptible plants, e.g. by use of methods described above. For example, the processor may be able to determine locations 201 of pest susceptible plants based on e.g. integrating heuristics and mathematically based prognoses, manually inputted data and/or automatically processed data such as aerial images and other sensor data, e.g. captured automatically by the unmanned units or via e.g. wireless sensor units present in the field of interest, potentially communicating either directly with the processor or indirectly via the unmanned units.

Further examples of the first and second areas and methods for determining them are provided in the examples below.

Examples of methods for delivering the behavioural control agent and the pest control agent are also provided in the examples below. In general the behavioural control agent may be delivered before (or after) delivery of the pest control agent or the behavioural control agent may be delivered at the same time or substantially at the same time as delivery of the pest control agent. The behavioural control agent may be delivered before (after) the pest control agent in order to regulate the insect behaviour before (after) the pest control agent is delivered. For example, the pest control agent may be delivered over the second area 203 a predetermined time delay after the behavioural control agent has been delivered in order to optimise the effect of the pest control agent.

In other situations the behavioural control agents may be delivered after the pest control agents e.g. in order to obtain a more pronounced staying (or migration) behaviour of the beneficial organism, e.g. when it is desired that the population of beneficial organisms stay put in the pest susceptible area even though migration would normally occur after a while, e.g. due to induced changes in the predator/prey balance, the beneficial agent here acting as the predator.

In other situations the behavioural and pest control agents may be delivered at the same time. In this case a single unmanned unit configured with first and second delivering devices may be utilized.

The behavioural control agent is generally different from the pest control agent, e.g. they may contain different species or may be different in other ways. However, the behavioural control agent and the pest control agent could also be identical.

Fig. 2 illustrates an example where the determined location 201 of pest susceptible plants constitutes a fraction of the agricultural environment 200.

The first area 202 constitutes a fraction of the location 201 and may have been determined as the area in which the population density of harmful organisms (of a given species) is above a given threshold and/or in which the crop has a certain level of damage.

In order to keep the organisms, in this case the harmful organisms, within the first area 202 a behavioural control agent is delivered within the first area. In this case, the behavioural control agent may be a pheromone, e.g. a sex pheromone which causes organisms to stay in the area.

In this example, the second area 203 is identical or substantially identical to the first area. The pest control agent to be delivered in the second area 203 may be organisms such as predator mites who kill the harmful organisms.

The pest control agent could also be pheromones, e.g. sex hormones, which could have the effect of confusing the harmful organisms so that they become less harmful. The pest control agent could also be pesticides, which in this case is used effectively over a limited area having the highest population density of harmful organisms.

In another example, the behavioural control agent to be delivered in the first area 202 may have the effect of controlling the behaviour of beneficial organisms, e.g. for the purpose of the keeping the beneficial organisms within the first area 202. The beneficial organisms already present in the first area 202 may for example be predator mites which reduces the harmfulness of pest organisms. In this example the pest control agent to be delivered may be beneficial organisms of the same species as the beneficial organisms which were already present within the first area 202. In this way the population density of beneficial organisms can be increased in order to improve the plant growing processes.

Advantageously, by the combined behavioural regulation of organisms (harmful or beneficial) and the pest control action, the effectiveness of the pest control agent is improved.

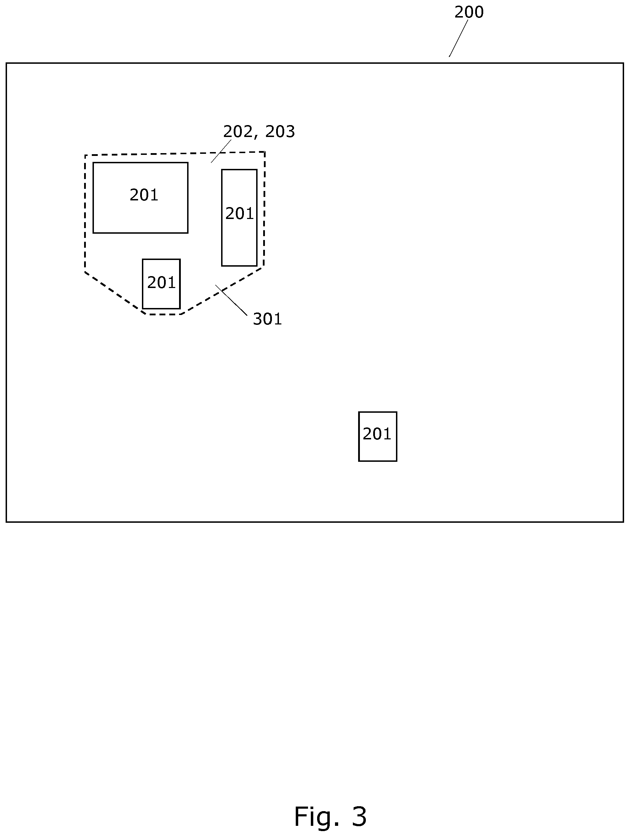

Fig. 3 illustrates an example where a plurality of locations 201 of pest susceptible plants has been determined. In order to achieve an effective utilization of the unmanned units, or in order to improve effectiveness of the behavioural and pest control agents, the first area 202, possibly also the second area 202, may be determined as an integral area 301 which spans a plurality of locations 201 of pest susceptible plants. Conditions may determine if a location 201 should be included in the integral area or not. For example, a condition may define that locations 201 having infection conditions or pest susceptibility conditions above a predefined threshold are included (e.g. an infection condition/pest susceptibility condition of a location 201 may be determined as a mean value of infection conditions of plants in the location). Another condition may define that locations 201 having a distance from the other locations 201, or the integral area, less than a given threshold are included. The distance could be determined as a distance between centres of locations 201 or integral areas 301.

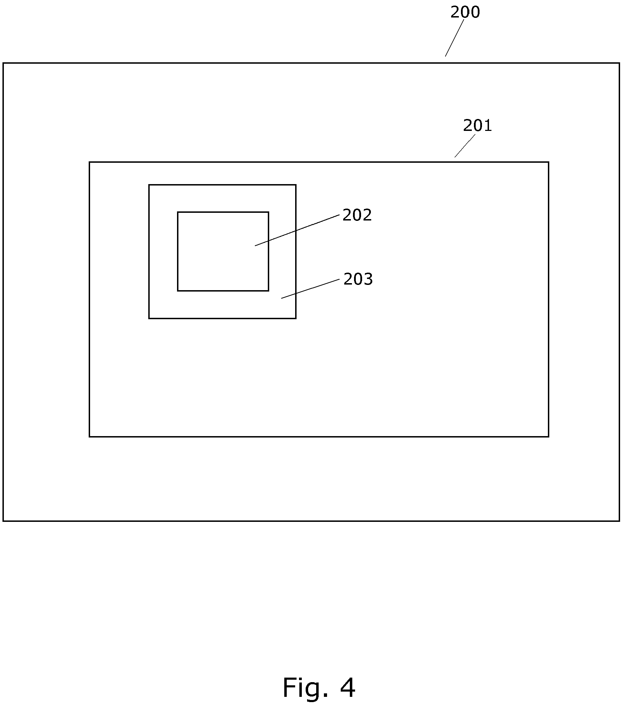

Fig. 4 illustrates an example where the first area 202 has been determined as a fraction of the location 201 (e.g. by the method described in connection with Fig. 2) and where the second area 203 has been determined as an area which circumscribes the first area 202 at least partially. According to this example, the behavioural control agent may be delivered in the first area 202 in order to keep the harmful organisms within the first area and possibly attract harmful organisms from other locations. Accordingly, the behavioural control agent may be a pheromone having attracting properties for the harmful organisms. The pest control agent, e.g. predator mites, is delivered in the circumscribing second area 203. In this way, the harmful organisms are trapped in the first area by the pest control agent, e.g. predator mites, delivered in an area 203 circumscribing the first area 202.

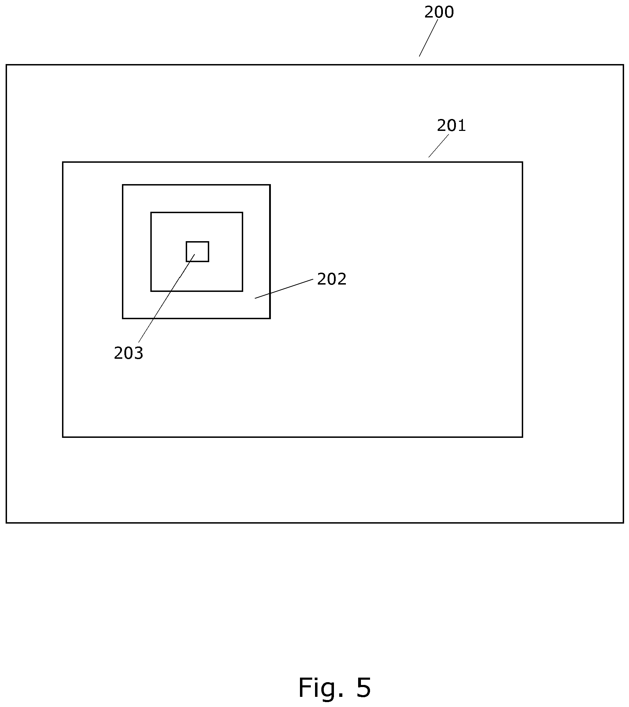

Fig. 5 illustrates an example where the first area 202 has been determined (e.g. using methods described elsewhere) so that the first area 202 circumscribes an area, which may have been determined as having a population density of harmful organisms above a given threshold. The dimension of the width of the fringe of the first area 202 may be set according to predetermined dimensions. In other words, the first area 202 may be determined so that it circumscribes the second area 203, where the second area 203 constitutes at least a fraction of the area circumscribed by the first area 202.

According to this example, the behavioural control agent could be predator mites which constricts the harmful organisms and therefore prevents escape of the harmful organisms. The second area 203 could be the circumscribed area or a fraction of the circumscribed area. The pest control agent to be delivered in the second area 203 could be predator mites of the same species as delivered in the first area 202. Since the constricted harmful organisms may try to escape the predator mites by moving towards the centre of the circumscribed area, the pest control agent may be effectively utilised by determining the second area 203 as a fraction of the circumscribed area. Alternatively, the pest control agent could be a pesticide delivered over the second area 203.

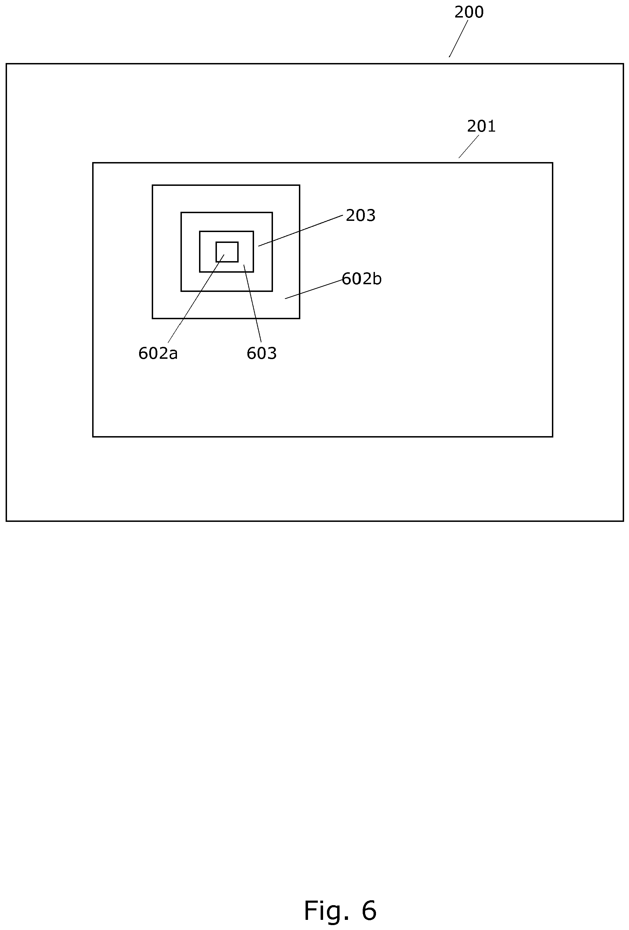

Fig. 6 illustrates an embodiment wherein the one or more unmanned units 111, 112 are configured with one or more first delivering devices 121 for delivering a behavioural attraction agent for attracting the harmful organisms and for delivering a behavioural repulsion agent for repelling the harmful organisms. According to this embodiment the step of determining the first area 202 comprises determining an attraction area 602a and a repulsion area 602b. The repulsion area 602b may be determined as an area which, at least partially, circumscribes an area which may have been determined as an area in which the population density of harmful organisms is above a given threshold. The attraction area 602a may be determined as an area centred in the repulsion area and the area of the attraction area 602a may be determined as a fraction of the area circumscribed by the repulsion area 602b. Accordingly, the repulsion area 602b encloses or surrounds the attraction area 602a, i.e. so that the repulsion area does not overlap the attraction area. The step of delivering the behavioural control agent over the first area comprises delivering the behavioural attraction agent over the attraction area 602a and delivering the behavioural repulsion agent over the repulsion area 602b. In this way the organisms are both repelled towards the attraction area 602a by the repulsion agent and attracted into the attraction area 602a by the attraction agent so that an efficient local densening of the populations of organisms (beneficial and/or harmful) is achieved. In this example, the second area 203 may be determined as an area circumscribed by the repulsion area 602b. For example, the second area may be identical to the attraction area 602a or may be selected as an area 603 which includes the attraction area 602a.

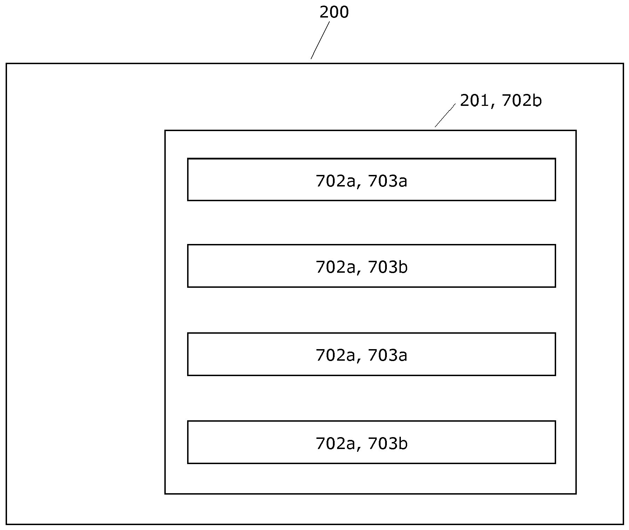

Fig. 7 illustrates an example where the first area 202 is divided into pest (e.g. spider mite) attraction areas 702a and pest (e.g. spider mite) repulsion areas 702b. In areas 702a is delivered a behavioural attraction agent and in area 702b is delivered a behavioural repulsion agent. The repulsion area 702b may be equal or equivalent to the pest susceptible area 201, except for the exclusion of areas 702a. Accordingly, the repulsion area 702b encloses or surrounds the attraction areas 702a, i.e. so that repulsion area does not overlap the attraction areas 702a. The second area 203 may additionally be determined as two or more second areas 703a, 703b having different locations, i.e. as two or more overlapping or non-overlapping areas. The two or more second areas 703a, 703b are also referred to as first and second delivering areas 703a, 703b. The areas 703a, 703b may e.g. be equivalent to the attraction areas 702a, i.e. they may have the same size and the same locations as the attraction areas 702a.

According, to this embodiment first and second different pest control agents are delivered. For example, the first pest control agent may be predatory mites and the second pest control agent may be minute pirate bugs. For example, first and second pest control agents may be delivered over the second area, over a plurality of similar second areas having different locations. The first and second pest control agents may be delivered at the same time, e.g. they may be mixed and delivered with the same second delivering device, or they may be delivered via separate delivering devices for delivering the first and second pest agents, simultaneously or at different times. Accordingly, the first and second pest agents are mixed within the areas wherein they are delivered.

Alternatively, within the areas 703a is applied the first pest control agent and within the areas 703b is applied the second pest control agent. Accordingly, the first and second pest control agents are different. The two types of pest control agents, released in areas 703a and 703b, respectively, may then work together in reducing the population density and harmfulness of the pest (e.g. spider mite). According to this embodiment, the one or more unmanned units may be configured with one or more second delivering devices for delivering first and second different pest control agents and the delivery of the pest control agent over the second area comprises delivering the first and second pest control agents over the first and second non-overlapping area 703a, 703b, respectively.

Examples of behavioural attraction agents and behavioural repulsion agent, e.g. for attracting and repelling spider mites and predators hereof, include e.g. farnesols, acetonitrile and methyl salicylate.

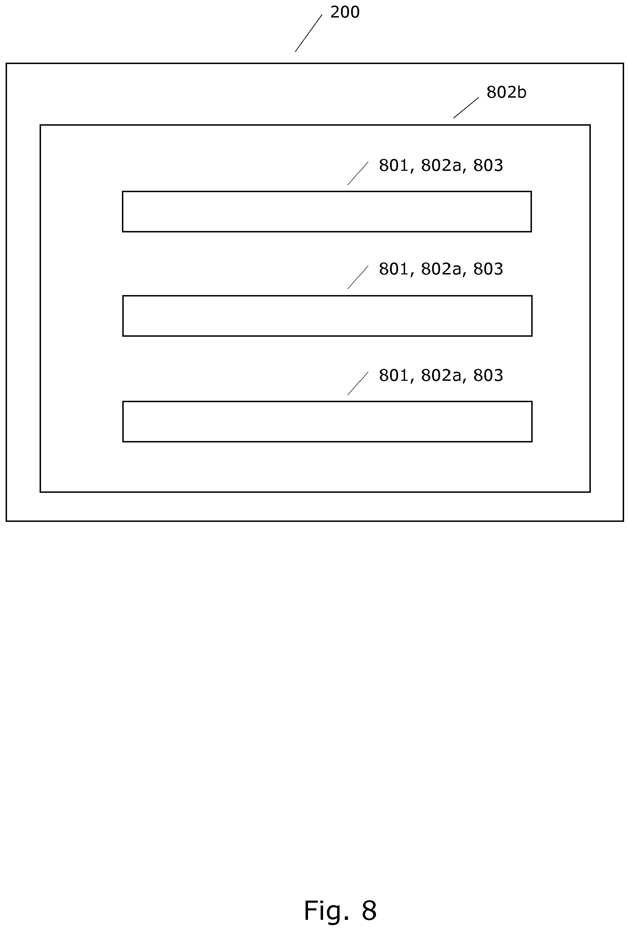

Fig. 8 illustrates an example where the pest susceptible area 201 has been determined as a plurality of pest susceptible areas 801 which may be isolated areas, i.e. areas which are not directly connected. In this example a behavioural attraction agent is applied in areas 802a which are similar or identical to the pest susceptible areas 801. A behavioural repulsion agent is applied in area 802b surrounding, but not overlapping, areas 802a. Finally a pest control agent is applied in areas 803 which are similar or identical to the areas 802a in which were applied the behavioural attraction agent. The described example could for instance match an arable farming scenario with interchanging row sections of yellow and white rapeseed, in which particularly one of the two colours (yellow) would efficiently attract pest organisms (pollen beetles).

The processor 130 may be configured to determine the first area 202, e.g. dependent on the location of pest susceptible plants and to determine the second area 203 dependent on the location of pest susceptible plants and/or the first area. Locations, extensions and shapes of the first and second areas may be determined according to the examples provided above. As noted above, the first area could be determined based on determined infection conditions, e.g. based on comparing determined infection conditions with a predetermined threshold. The first area could also be determined based on a comparison of determined pest susceptibility condition with a predefined threshold, where the pest susceptibility condition may be in the form of likelihood for a future plant infection and/or estimated associated aggregate costs (and/or inconvenience) hereof. Alternatively or additionally, the first area 202 could be determined based on determined heuristics and mathematically based prognoses, e.g. based on comparing determined likelihoods of a severe infection condition with a predetermined likelihood threshold.

Furthermore, the processor 130 may be configured to control the unmanned system 100 to deliver the behavioural control agent over the first area and to deliver the pest control agent over the second area. That is, the processor 130 may be configured to control the unmanned units and the delivering devices to deliver behavioural control agents and pest control agent over the determined areas. The information determined by the processor 130 for controlling purposes (control of unmanned units and delivering devices) may be determined based on collected data, e.g. collected data containing information about locations of pest susceptible plants, weather data, type and population density of harmful organisms, degree of present pest damage, likelihood and/or degree of future pest damages, and other relevant data.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A method using an unmanned system (100) comprising one or more unmanned aerial units (111, 112) for a cultivation method for improving plant growing processes in an agricultural environment (200), wherein the one or more unmanned aerial units are configured with a first delivering device (121) for delivering a behavioural control agent for controlling behaviour of organisms and a second delivering device (122) for delivering a different pest control agent in the form of living organisms for reducing harmfulness of pest organisms, where the second delivery device is a mechanical device capable of delivering the living organisms, the method comprises the steps:
- determining a first area (202) and a second area (203) dependent on a location (201) of pest susceptible plants, and by using the unmanned system,
- delivering the behavioural control agent over the first area, and
- delivering the pest control agent over the second area.

2. A method according to claim 1, wherein the method comprises delivering the pest control agent over the second area (203) after the behavioural control agent has been delivered over the first area (202).

3. A method according to claim 2, wherein the method comprises delivering the pest control agent over the second area (203) at a predetermined time delay before/after the behavioural control agent is delivered over the first area (202).

4. A method according to any of the preceding claims, wherein the method comprises
- determining a location (201) of plants infected by the pest organisms,
- determining an infection condition of the plants infected by the pest organisms, and
- determining the first and/or second areas dependent on the location of the infected plants and the infection condition.

5. A method according to any of the preceding claims, wherein the method comprises determining the first area (202) as an integral area which spans a plurality of locations (201) of pest susceptible plants.

6. A method according to any of the preceding claims, wherein the method comprises determining the second area (203) so that the second area, at least partially, circumscribes the first area (202).

7. A method according to any of the preceding claims, wherein the method comprises determining the first area (202) so that the first area, at least partially, circumscribes the second area (203) and wherein the second area (203) is determined so that it constitutes at least a fraction of the area circumscribed by the first area (202).

8. A method according to any of the preceding claims, wherein the one or more unmanned units are configured with one or more first delivering devices for delivering a behavioural attraction agent for attracting the organisms and for delivering a behavioural repulsion agent for repelling the organisms, and wherein
- the step of determining the first area (202) comprises determining an attraction area (602a, 702a) and a repulsion area (602b, 702b), and
- the step of delivering the behavioural control agent over the first area comprises delivering the behavioural attraction agent over the attraction area and delivering the behavioural repulsion agent over the repulsion area.

9. A method according to claim 8, wherein the method comprises determining the repulsion area (602b, 702b) so that the repulsion area surrounds or circumscribes the attraction area (602a, 702a).

10. A method according to any of the preceding claims, wherein the one or more unmanned units are configured with one or more second delivering devices for delivering different first and second pest control agents, wherein
- the step of delivering the pest control agent over the second area comprises delivering the first and second pest control agents over the second area (203, 803).

11. A method according to claim 10, wherein the method further comprises determining first and second delivering areas (703a, 703b), and where the step of delivering the pest control agent over the second area comprises delivering the first and second pest control agents over the first and second delivering areas (703a, 703b), respectively.

12. An unmanned system (100) for improving plant growing processes in an agricultural environment (200), the unmanned system comprises one or more unmanned aerial units (111, 112), where the one or more units are configured with a first delivering device for delivering a behavioural control agent for controlling behaviour of organisms and a second delivering device for delivering a different pest control agent in the form of living organisms for reducing harmfulness of pest organisms, where the second delivery device is a mechanical device capable of delivering the living organisms, the unmanned system further comprises a processor (130) configured to,
- determine a first area (202) and a second area (203) dependent on a location (201) of pest susceptible plants, where the first area is determined for delivery of the behavioural control agent, and where the second area is determined for delivery of the pest control agent.

13. A cultivation system according to claim 12, wherein the processor (130) is further configured to control the unmanned system (100) to deliver the behavioural control agent over the first area and to deliver the pest control agent over the second area.

14. A cultivation system according to any of claims 12-13, wherein the processor (130) is further configured to determine a path that the one or more unmanned aerial units should follow and to transmit path data to the unmanned aerial units.

15. A cultivation system according to any of claims 12-14, wherein the processor (130) is further configured to determine the location (201) of pest susceptible plants based on images or measurements of pheromones or other measureable insect-presence-indicators.

## Patentansprüche

1. Verfahren unter Verwendung eines unbemannten Systems (100), umfassend eine oder mehrere unbemannte Lufteinheiten (111, 112) für ein Kultivierungsverfahren zum Verbessern von Pflanzenwachstumsprozessen in einer landwirtschaftlichen Umgebung (200), wobei die eine oder mehreren unbemannten Lufteinheiten mit einer ersten Abgabevorrichtung (121) zum Abgeben eines Verhaltenssteuerungsmittels zur Verhaltenssteuerung von Organismen und einer zweiten Abgabevorrichtung (122) zum Abgeben eines anderen Schädlingsbekämpfungsmittels in Form von lebenden Organismen zum Vermindern der Schädlichkeit von Schädlingsorganismen ausgelegt sind, wobei die zweite Abgabevorrichtung eine mechanische Vorrichtung ist, die zum Abgeben der lebenden Organismen in der Lage ist, wobei das Verfahren die Schritte umfasst:
- Bestimmen eines ersten Bereichs (202) und eines zweiten Bereichs (203) in Abhängigkeit von einem Standort (201) von Pflanzen, die für Schädlinge anfällig sind, und unter Verwendung des unbemannten Systems,
- Abgeben des Verhaltenssteuerungsmittels über dem ersten Bereich und
- Abgeben des Schädlingsbekämpfungsmittels über dem zweiten Bereich.

2. Verfahren nach Anspruch 1, wobei das Verfahren das Abgeben des Schädlingsbekämpfungsmittels über dem zweiten Bereich (203) umfasst, nachdem das Verhaltenssteuerungsmittel über dem ersten Bereich (202) abgegeben wurde.

3. Verfahren nach Anspruch 2, wobei das Verfahren das Abgeben des Schädlingsbekämpfungsmittels über dem zweiten Bereich (203) mit einer vorbestimmten Zeitverzögerung vor/nach dem Abgeben des Verhaltenssteuerungsmittel über dem ersten Bereich (202) umfasst.

4. Verfahren nach einem der vorhergehenden Ansprüche, wobei das Verfahren umfasst
- Bestimmen eines Standorts (201) von Pflanzen, die von den Schädlingsorganismen befallen sind,
- Bestimmen eines Befallszustands der von den Schädlingsorganismen befallenen Pflanzen und
- Bestimmen des ersten und/oder zweiten Bereichs in Abhängigkeit vom Standort der befallenen Pflanzen und dem Befallszustand.

5. Verfahren nach einem der vorhergehenden Ansprüche, wobei das Verfahren das Bestimmen des ersten Bereichs (202) als einen einstückigen Bereich umfasst, der eine Vielzahl von Standorten (201) von Pflanzen, die für Schädlinge anfällig sind, umspannt.

6. Verfahren nach einem der vorhergehenden Ansprüche, wobei das Verfahren das Bestimmen des zweiten Bereichs (203) umfasst, sodass der zweite Bereich den ersten Bereich (202) mindestens teilweise umschreibt.

7. Verfahren nach einem der vorhergehenden Ansprüche, wobei das Verfahren das Bestimmen des ersten Bereichs (202) umfasst, sodass der erste Bereich den zweiten Bereich (203) mindestens teilweise umschreibt, und wobei der zweite Bereich (203) so bestimmt wird, dass er mindestens einen Teil des vom ersten Bereich (202) umschriebenen Bereichs darstellt.

8. Verfahren nach einem der vorhergehenden Ansprüche, wobei die eine oder mehreren unbemannten Einheiten mit einer oder mehreren ersten Abgabevorrichtungen zum Abgeben eines anlockenden Verhaltensmittels zum Anlocken der Organismen und zum Abgeben eines abstoßenden Verhaltensmittels zum Abstoßen der Organismen ausgelegt sind, und wobei
- der Schritt des Bestimmens des ersten Bereichs (202) das Bestimmen eines Anlockungsbereichs (602a, 702a) und eines Abstoßungsbereichs (602b, 702b) umfasst und
- der Schritt des Abgebens des Verhaltenssteuerungsmittels über dem ersten Bereich das Abgeben des anlockenden Verhaltensmittels über dem Anlockungsbereich und das Abgeben des abstoßenden Verhaltensmittels über dem Abstoßungsbereich umfasst.

9. Verfahren nach Anspruch 8, wobei das Verfahren das Bestimmen des Abstoßungsbereichs (602b, 702b) umfasst, sodass der Abstoßungsbereich den Anlockungsbereich (602a, 702a) umgibt oder umschreibt.

10. Verfahren nach einem der vorhergehenden Ansprüche, wobei die eine oder mehreren unbemannten Einheiten mit einer oder mehreren zweiten Abgabevorrichtungen zum Abgeben verschiedener erster und zweiter Schädlingsbekämpfungsmittel ausgelegt sind, wobei
- der Schritt des Abgebens des Schädlingsbekämpfungsmittels über dem zweiten Bereich das Abgeben des ersten und des zweiten Schädlingsbekämpfungsmittels über dem zweiten Bereich (203, 803) umfasst.

11. Verfahren nach Anspruch 10, wobei das Verfahren ferner Bestimmen eines ersten und eines zweiten Abgabebereichs (703a, 703b) umfasst und wobei der Schritt des Abgebens des Schädlingsbekämpfungsmittels über dem zweiten Bereich das Abgeben des ersten und des zweiten Schädlingsbekämpfungsmittels über dem ersten bzw. zweiten Abgabebereich (703a, 703b) umfasst.

12. Unbemanntes System (100) zum Verbessern von Pflanzenwachstumsprozessen in einer landwirtschaftlichen Umgebung (200), wobei das unbemannte System eine oder mehrere unbemannte Lufteinheiten (111, 112) umfasst, wobei die eine oder mehreren Einheiten mit einer ersten Abgabevorrichtung zum Abgeben eines Verhaltenssteuerungsmittels zur Verhaltenssteuerung von Organismen und einer zweiten Abgabevorrichtung zum Abgeben eines anderen Schädlingsbekämpfungsmittels in Form von lebenden Organismen zum Vermindern der Schädlichkeit von Schädlingsorganismen ausgelegt sind, wobei die zweite Abgabevorrichtung eine mechanische Vorrichtung ist, die zum Abgeben der lebenden Organismen in der Lage ist, wobei das unbemannte System ferner einen Prozessor (130) umfasst, der zu Folgendem ausgelegt ist
- Bestimmen eines ersten Bereichs (202) und eines zweiten Bereichs (203) in Abhängigkeit von einem Standort (201) von Pflanzen, die für Schädlinge anfällig sind, wobei der erste Bereich zur Abgabe des Verhaltenssteuerungsmittels bestimmt ist und wobei der zweite Bereich zur Abgabe des Schädlingsbekämpfungsmittels bestimmt ist.

13. Kultivierungssystem nach Anspruch 12, wobei der Prozessor (130) ferner zum Steuern des unbemannten Systems (100) ausgelegt ist, um das Verhaltenssteuerungsmittel über dem ersten Bereich und das Schädlingsbekämpfungsmittel über dem zweiten Bereich abzugeben.

14. Kultivierungssystem nach einem der Ansprüche 12 - 13, wobei der Prozessor (130) ferner zum Bestimmen eines Wegs, dem die eine oder mehreren unbemannten Lufteinheiten folgen sollten, und zum Senden von Wegdaten an die unbemannten Lufteinheiten ausgelegt ist.

15. Kultivierungssystem nach einem der Ansprüche 12 - 14, wobei der Prozessor (130) ferner zum Bestimmen des Standorts (201) von Pflanzen, die für Schädlinge anfällig sind, auf der Grundlage von Bildern oder Messungen von Pheromonen oder anderen messbaren Indikatoren für die Anwesenheit von Insekten ausgelegt ist.

## Revendications

1. Procédé utilisant un système sans équipage (100) comprenant une ou plusieurs unités aériennes sans équipage (111, 112) pour un procédé de culture destiné à améliorer les processus de culture de plantes dans un environnement agricole (200), dans lequel la ou les unités aériennes sans équipage sont configurées avec un premier dispositif de délivrance (121) destiné à délivrer un agent de régulation de comportement afin de réguler le comportement d'organismes et un second dispositif de délivrance (122) destiné à délivrer un agent antiparasitaire différent sous la forme d'organismes vivants afin de réduire la nocivité d'organismes nuisibles, le second dispositif de délivrance étant un dispositif mécanique capable de délivrer les organismes vivants, le procédé comprend les étapes suivantes :
- la détermination d'une première zone (202) et d'une seconde zone (203) en fonction d'un emplacement (201) de plantes sensibles aux parasites et en utilisant le système sans équipage,
- la délivrance de l'agent de régulation de comportement sur la première zone et
- la délivrance de l'agent antiparasitaire sur la seconde zone.

2. Procédé selon la revendication 1, dans lequel le procédé comprend la délivrance de l'agent antiparasitaire sur la seconde zone (203) après que l'agent de régulation de comportement a été délivré sur la première zone (202).

3. Procédé selon la revendication 2, dans lequel le procédé comprend la délivrance de l'agent antiparasitaire sur la seconde zone (203) avec un laps de temps prédéfini avant/après la délivrance de l'agent de régulation de comportement sur la première zone (202).

4. Procédé selon l'une quelconque des revendications précédentes, dans lequel le procédé comprend
- la détermination d'un emplacement (201) de plantes infectées par les organismes nuisibles,
- la détermination d'un état d'infection des plantes infectées par les organismes nuisibles, et
- la détermination des première et/ou seconde zones en fonction de l'emplacement des plantes infectées et de l'état d'infection.

5. Procédé selon l'une quelconque des revendications précédentes, dans lequel le procédé comprend la détermination de la première zone (202) en tant que zone intégrale qui s'étend sur une pluralité d'emplacements (201) de plantes sensibles aux parasites.

6. Procédé selon l'une quelconque des revendications précédentes, dans lequel le procédé comprend la détermination de la seconde zone (203) de sorte que la seconde zone circonscrive, au moins partiellement, la première zone (202).

7. Procédé selon l'une quelconque des revendications précédentes, dans lequel le procédé comprend la détermination de la première zone (202) de sorte que la première zone circonscrive, au moins partiellement, la seconde zone (203) et dans lequel la seconde zone (203) est déterminée de sorte qu'elle constitue au moins une fraction de la zone circonscrite par la première zone (202).

8. Procédé selon l'une quelconque des revendications précédentes, dans lequel la ou les unités sans équipage sont configurées avec un ou plusieurs premiers dispositifs de délivrance pour délivrer un agent comportemental d'attraction pour attirer les organismes et pour délivrer un agent comportemental de répulsion pour repousser les organismes et dans lequel
- l'étape de détermination de la première zone (202) comprend la détermination d'une zone d'attraction (602a, 702a) et d'une zone de répulsion (602b, 702b) et
- l'étape de délivrance de l'agent de régulation de comportement sur la première zone comprend la délivrance de l'agent comportemental d'attraction sur la zone d'attraction et la délivrance de l'agent de comportemental répulsion sur la zone de répulsion.

9. Procédé selon la revendication 8, dans lequel le procédé comprend la détermination de la zone de répulsion (602b, 702b) de sorte que la zone de répulsion entoure ou circonscrive la zone d'attraction (602a, 702a).

10. Procédé selon l'une quelconque des revendications précédentes, dans lequel la ou les unités sans équipage sont configurées avec un ou plusieurs seconds dispositifs de délivrance pour délivrer des premier et second agents antiparasitaire différents, dans lequel
- l'étape de délivrance de l'agent antiparasitaire sur la seconde zone comprend la délivrance des premier et second agents antiparasitaire sur la seconde zone (203, 803).

11. Procédé selon la revendication 10, dans lequel le procédé comprend en outre
la détermination de première et seconde zones de délivrance (703a, 703b) et dans lequel l'étape de délivrance de l'agent antiparasitaire sur la seconde zone comprend la délivrance des premier et second agents antiparasitaire respectivement sur les première et seconde zones de délivrance (703a, 703b).

12. Système sans équipage (100) destiné à améliorer les processus de culture de plantes dans un environnement agricole (200), le système sans équipage comprend une ou plusieurs unités aériennes sans équipage (111, 112), la ou les unités étant configurées avec un premier dispositif de délivrance destiné à délivrer un agent de régulation de comportement pour réguler le comportement d'organismes et un second dispositif de délivrance destiné à délivrer un agent antiparasitaire différent sous la forme d'organismes vivants afin de réduire la nocivité des organismes nuisibles, le second dispositif de délivrance étant un dispositif mécanique capable de délivrer les organismes vivants, le système sans équipage comprend en outre un processeur (130) configuré pour
- déterminer une première zone (202) et une seconde zone (203) en fonction d'un emplacement (201) de plantes sensibles aux parasites, la première zone étant déterminée pour la délivrance de l'agent de régulation de comportement et la seconde zone étant déterminée pour la délivrance de l'agent antiparasitaire.

13. Système de culture selon la revendication 12, dans lequel le processeur (130) est en outre configuré pour commander le système sans équipage (100) afin de délivrer l'agent de régulation de comportement sur la première zone et de délivrer l'agent antiparasitaire sur la seconde zone.

14. Système de culture selon l'une quelconque des revendications 12 et 13, dans lequel le processeur (130) est en outre configuré pour déterminer un chemin que la ou les unités aériennes sans équipage devraient suivre et pour transmettre des données de chemin aux unités aériennes sans équipage.

15. Système de culture selon l'une quelconque des revendications 12 à 14, dans lequel le processeur (130) est en outre configuré pour déterminer l'emplacement (201) de plantes sensibles aux nuisibles sur la base d'images ou de mesures de phéromones ou d'autres indicateurs de la présence d'insectes mesurables.
